# EUROPEAN PATENT SPECIFICATION

(11) **EP 4 314 761 B1**
(45) Date of publication and mention of the grant of the patent: **18.02.2026**
(21) Application number: 22720593.7
(22) Date of filing: 31.03.2022
(51) Int. Cl.: G01N 1/36, G01N 1/31, G06K 7/10, G06K 7/14, B01L 3/00, B01L 9/00

(54) **CODING METHOD FOR EMBEDDING CASSETTES AND APPARATUS USED THEREFORE**
KODIERUNGSVERFAHREN ZUM EINBETTEN VON KASSETTEN UND VORRICHTUNG DAFÜR
PROCÉDÉ DE CODAGE POUR INTÉGRER DES CASSETTES ET APPAREIL UTILISÉ POUR CELUI-CI

(30) Priority: 02.04.2021 IT 202100008363
(43) Date of publication of application: 07.02.2024
(73) Proprietor: M-PIX S.r.l., 21018 Sesto Calende (VA) (IT)
(72) Inventor: Cucchi, Maurizio, 21038 Leggiuno (VA) (IT)
(74) Representative: Serravalle, Marco
(86) International application number: PCT/EP2022/058671
(87) International publication number: WO 2022/207847

(56) References cited:
- WO-A1-2019/086763
- WO-A1-2020/094667
- US-A1- 2008 235 055
- US-A1- 2019 183 465
- US-A1- 2019 188 433
- US-A1- 2020 042 791

## Description

### Field of the invention

**.** The present invention is aimed at laboratories that carry out medical analysis and in particular histopathological and that are therefore habitual consumers of plastic cassettes suitable for fixation, processing and storage of tissue samples of human and/or veterinary origin.

**.** The aforementioned plastic cassettes, commonly called embedding cassettes, are products with worldwide standardized geometry and are produced by a multitude of specialized companies that distribute them through various and multiple channels on the world market.

### Background of the invention

**.** Embedding cassettes are consumables widely used in analysis laboratories and hospitals. Their shape is that of a polyhedron with a rectangular base, whose section along the major axis has the shape of a rectangle trapezoid, while the section along the minor axis is rectangular. The lower base of the polyhedron is therefore a rectangle, while the upper base is a rectangle of equal smaller side and greater side that is shorter than the lower base. At least one side of the embedding cassette is printable with printers specially developed for this application. Information about the contents of the box is usually printed on the oblique face of the polyhedron. The embedding cassettes usually arrive virgin in the laboratory and the laboratory itself takes care of printing on the cassette those indications necessary for the correct identification of the contents of the cassette, in conjunction with the identifying information of the patient.

**.** As a consequence of the above, nowadays the analysis laboratory counts among the machines necessary to complete the tissue analysis process at least one printing device that performs this writing operation; the device is managed by a computer that is connected to the laboratory network to access the database of the hospital of which it is part, drawing the data to be reported on the cassette.

**.** The printing performed by the printer on the cassette is forcibly cryptic for what concerns the 2D code that is normally affixed; the printed code has a modest readability to the naked eye and characters shown next to the 2D code are easily misread, since they are necessarily written with small font size given the small size of the cassette itself. The ease with which a commercial cassette is printed by the printer is related to the printing technology for which the cassette compound itself was designed by the manufacturer; cassettes designed for laser printing are technologically different from cassettes designed for writing with thermal transfer or inkjet.

**.** Laser printing is now the most sought after printing technique because, in addition to being recognized as the most eco-sustainable, it is the only one that guarantees the resistance of printing to the aggression of highly corrosive agents and/or solvents, which are used in the histological sample preparation process. The printing with laser technology, operated on cassettes that are not provided for this technology, results, on average, in modest or poor readability, generating a modest colour contrast compared to the background. Normally the devices now on the market for this purpose have on board one or more warehouses, that is containers with mostly vertical extension, which neatly house the blank cassettes as they are available on the international market. Sometimes, the printer apparatus is provided with more than one hub; in this case, each hub houses boxes with a specific colour, and not only white. Hubs can be shaped like a carousel of vertical columns that engages the pick-up station of the box depending on the programming, or like a linear array of columns, with kinematic systems to extract the cassette from the programmed column.

**.** WO 2012/159762 discloses a laser printer for embedding cassettes, which laser printer allows printing the cassettes on three sides thanks to grippers that, thanks to the presence of motors, rotate the cassette showing the printing head the three faces to be printed in succession.

**.** WO 2019/206681 discloses a printer capable of printing a cassette on three sides using a mirror system that allows printing on the various sides without rotating the embedding cassette. US 2019/183465 A1 discloses another system for identifying embedding cassettes in a lab or in a hospital.

**.** One of the advantages of a laser printer is that it does not require consumable products, which are instead necessary for the maintenance of ink jet and thermal transfer printers, such as ribbon, ink, cleaning solvents, ink cartridges, that almost always are also expensive to dispose and today considered not "eco-sustainable". However, laser printers are considerably more expensive than ink jet or thermal transfer printers.

**.** There is a need for a simpler embedding cassette management system, requiring less equipment from the laboratory itself and allowing easy and error-free storage of cassette data.

### Brief description of the invention

**.** The present invention is directed to a system for identifying embedding cassettes in a lab or in a hospital according to claim 1. Such a system particularly comprises a set of histological embedding cassettes wherein each of the cassettes is marketed with a two-dimensional code printed on one of the sides of the cassette. The two-dimensional code is such as to guarantee the uniqueness of the code even on a large number of cassettes.

**.** The invention is also directed to a method of classifying embedding cassettes, i.e. cassettes for histological inclusion, according to claim 9, which involves associating information related to histopathological material inserted in the cassette with the two-dimensional code printed on the blank cassette. Advantageous options are disclosed in the dependent claims.

### Brief description of the figures

Figure 1 illustrates an embodiment of an embedding cassette according to the invention with a two-dimensional code printed thereon.
Figure 2 illustrates an example of two-dimensional unique code to be printed on the embedding cassette according to the invention.
Figure 3 illustrates a two-dimensional code obtained by a plot of intersecting lines.
Figure 4 illustrates a two-dimensional code obtained by differently oriented segments of different lengths.
Figure 5 illustrates an apparatus according to the invention that makes embedding cassettes containing the two-dimensional code available to the operator.
Figure 6 illustrates a desktop device for reading the code of a cassette according to the invention.
Figure 7 shows a pair of augmented reality glasses for use in the present invention.

### Detailed description of the invention

**.** The present invention is primarily directed to an embedding cassette characterized by having printed on one of the faces a unique two-dimensional code, whose code has a very high number of possible combinations. The number of possible combinations is preferably greater than or equal to 10⁹, more preferably greater than or equal to 10¹², even more preferably greater than or equal to 10¹⁵.

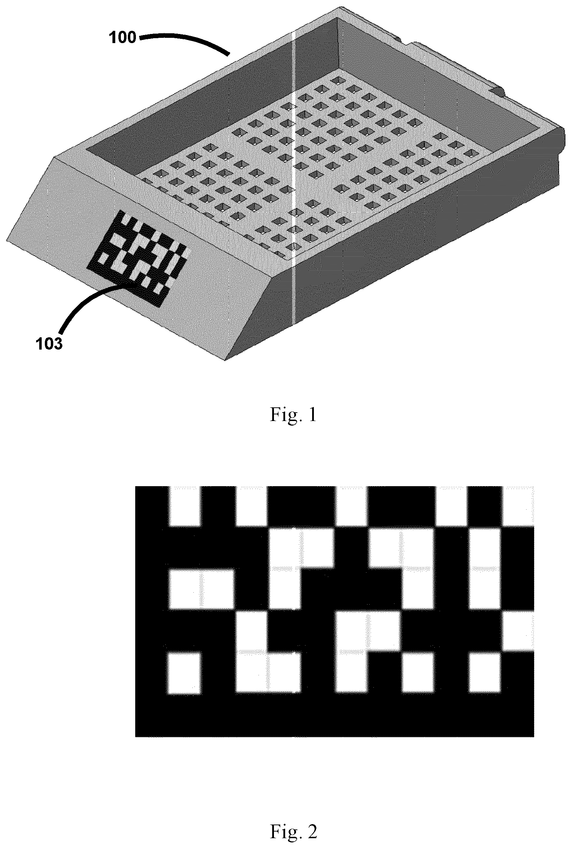

**.** Figure 1 shows an example of embedding cassette according to the invention, in which the two-dimensional unique code is printed on the oblique face of the cassette. Although this is a preferred embodiment, it is possible to print the unique two-dimensional code on any side of the cassette. Since the unique two-dimensional code is printed by the cassettes' producer, the present invention allows the lab

**.** Figure 2 illustrates an example of a two-dimensional unique code, similar to a chessboard where two congruent sides consist of seamless black modules, having these two segments the function of determining the reference system to which to refer the remaining black modules on a white background. The number of possible combinations C of a matrix composed of 11 lines and 5 columns (n=55 dots) wherein 31 dots are printed (k=31) and 24 are blank is given by the formula: C= n!/k!x(n-k)! = 55!/31!x24! = 2.6x10¹⁵. The individual black modules on a white background, which make up the code, can have different geometries. It should be noted that the lower edge and on the left side of the code are not part of the code itself but represent a positioning system for reading the code.

**.** Black dots can be obtained by printing, using the known printing methods in the art, for example printer with toner, ink-jet, thermal transfer, laser head printing. Because of its precision, durability and the absence of consumable waste products, one of the preferred printing methods is laser head printing.

**.** Alternatively, the binary code can be obtained using, instead of marked (black) or unmarked (white) dots on the matrix, other binary symbols such as an inclined line in two different directions, i.e., \ or /.

**.** In a preferred embodiment, the binary code is a two-dimensional matrix of rows and j columns having a number of positions n= i x j between 20 and 100, where a binary code is present in each position of the matrix and, when defining k as the number of positions where one of the two binary codes is present, the ratio k/n is between 0.20 and 0.80, preferably between 0.30 and 0.70. For example, the number of possible C combinations obtained using an array of 8 rows and 8 columns for a total of 64 positions and where one of the two codes is used in 42 points is as follows: C= n!/k!x(n-k)! = 64!/42!x22! = 8.03x10¹⁶.

**.** In a preferred embodiment, the binary code consists of marked points (black) or unmarked points (white or cassette colour). In another embodiment, the binary code consists of two lines having different orientation, for example one binary code is \ while the other is /. In this case, n will be the total number of binary codes, while k will represent the number of a specific binary code, for example /.

**.** In any case, n and k shall be chosen in such a way that the number of possible combinations C is greater than or equal to 10⁹, preferably greater than or equal to 10¹², even more preferably greater than or equal to 10¹⁵. In fact, as the number of possible combinations increases, the probability that two cassettes used in the same laboratory have the same code decreases. In the unlikely case that such an event occurs, it would still be possible to remedy the problem by discarding one of the two cassettes printed with the identical code.

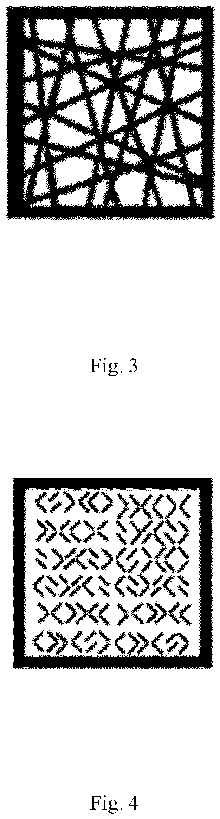

**.** It is also possible to use two-dimensional codes that are not binary. Figure 3 shows an example of such a unique code, obtained by intersecting a defined number of lines within the code rectangle. Varying the position, the tilt, and the thickness of each line, it is possible to obtain a very high number of unique codes.

**.** Figure 4 is another example of a non-binary unique code that can be used according to the invention. In this case, the code presents modules of arbitrary shape, in the form of segments of different length and inclination in such a way as to represent a very high number of possible combinations on a par with the matrix ones but with the undoubted advantage of high integrity, i.e. the ability to re-read even after partial corruption of part of the graphic representation of the printed code.

**.** Thus, using a two-dimensional code having a number of positions n=i x j between 20 and 100, you can assign a unique code to each cassette with a very high probability, preferably more than 99.99% that there are no two equal codes between the cassettes used by the same laboratory.

**.** In a preferred embodiment of the present invention, the unique two-dimensional code is printed at the factory, i.e. where cassettes are produced, as an image in the area predisposed for the encoding of the cassette, thus in a well-defined area and normally not exceeding 7x28 mm.

**.** The two-dimensional code is preferably generated by a proprietary algorithm and is managed as an image that belongs to a sufficiently vast set of homogeneous image configurations such that the single image element can be considered as unique within of the extremely vast set of possible configurations.

**.** The readability of the single 2D image takes place through a charge-couples device (CCD) with related software also operating with different distinct functionalities, which we mention later. A proprietary single image recognition algorithm associates a digital code that is generated by the execution of the algorithm itself.

**.** The digital code generated is then used by the application software to be uniquely associated with the print file that the operating system of the laboratory itself and/or the hospital generates and that, according to the prior art, would have been printed on the box. The present invention allows the Laboratory and/or the hospital to associate to the single cassette an amount of information that largely exceed the limitation imposed by the print area.

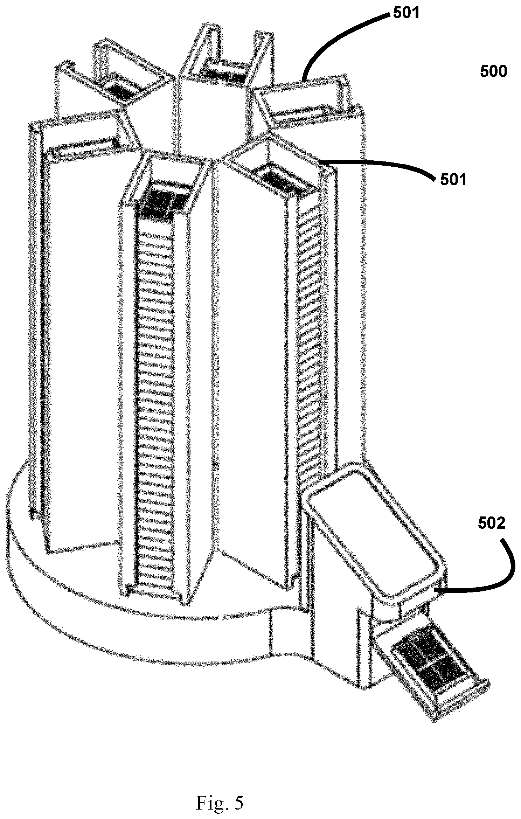

**.** Figure 5 illustrates an apparatus according to the invention to make the cassettes available to a laboratory operator. Apparatus 500 includes a multiplicity of warehouses 501 and a CCD 502 for reading code 103 from a box 100. Apparatus 500 dispense a box according to the invention by taking it from a multiplicity of warehouses that keep them stacked in order. The plurality of warehouses 501 may contain, for example, boxes of different basic colour. Responding to the operator's request to dispense the required cassettes, the apparatus will eject the cassettes making them available to the operator, having for each of them identified the unique code that distinguishes it thanks to CCD 502 (not visible in the figure) and having associated this code to the file of the specific information that the Laboratory and/or the hospital intends to combine and store, accessing the database of the institution according to a precise protocol. The apparatus 500 is therefore characterized by having at least one warehouse for the storage of cassettes 100 containing a unique two-dimensional code 103, and a reading system 502 of the unique code 103, which reading system 502 is in communication with the laboratory server.

**.** The cycle of dispensing and reading the code of a cassette is extremely faster than the traditional direct printing method. On the tables of the laboratory, or at the disposal of the operator, there will be new devices to make intelligible the file of the specific information that the Laboratory and/or the hospital has combined and that will be preserved. The 2D image printed on the cassette is thus definitively associated with a very precise file generated by the laboratory software itself to identify the specific tissue test of the specific patient.

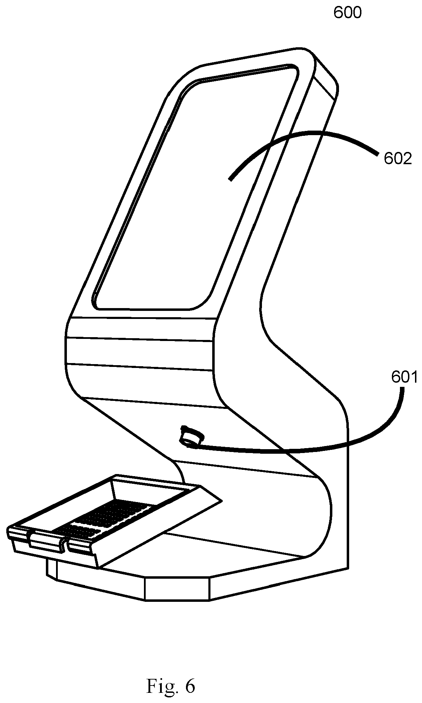

**.** Figure 6 illustrates a desktop machine 600 for reading the two-dimensional unique code of a cassette. The machine includes a CCD 601, a display 602 and a data connection system with the Laboratory server. The operator manually presents the code 103 of the box to be read under the eye of the CCD. On the display 602 of the device, information about the contents of the box and the associated patient and any other stored information on the hospital database and/or laboratory premises are clearly legible. If the cassette is not legible it means that it has not been properly dispensed by the machine 500.

**.** The present invention presents considerable advantages over the current system, which starts from blank cassettes that are printed by the laboratory. In fact, the present invention allows the individual laboratory to purchase cassettes printed with a unique code. The laboratory therefore does not need to buy printers for cassettes, which especially in the case of laser printers are quite expensive. The necessary equipment for the implementation of this invention is a system of distribution of preprinted cassettes; a two-dimensional unique code reading system and a processor to link the unique code to the file generated by the laboratory software related to the contents of the patient's specific cassette.

**.** All the laboratory has to do is to take a cassette from a cassette dispensing system; identify the cassette via the unique code; verify that the unique code is not already present in the computer system and in this case discard the box; or associate to the unique code of the box the information related to the file generated by the software of the laboratory. As stated above, there is no need for the laboratory to have a printer since the cassettes are received already printed. Alternatively, if a laboratory buys unprinted cassettes, it can print them with a random unique code and then use them according to the process of the invention. However, it must be clear that the system according to the invention does not comprise a printer or tag generator, and the process according to the invention does not comprise any printing step.

**.** The reading device is therefore a device capable of rendering intelligible the 2D image that is printed on the cassette and that has been associated to a very precise file generated by the laboratory software itself to identify the specific test tissue. Preferably, the device is equipped with CCD and Display, and after seeing under his CCD eye the cassette, if this has been correctly dispensed by the above machine, and therefore correctly associated with a specific examination for a specific patient of the Institute, will show on the display both the background colour of the cassette and the alphanumeric data that are useful to be displayed, to facilitate the work of the Technician with the least possible margin of human error. The background colour of the cassette can be indicative of the anatomical type of the organ to which the examination refers: for example, yellow for liver, and so on. If the cassette is not derived from the dispensing and initializing machine, the devices illustrated below to allow the clear reading of it, would recognize it as not pertinent and in any case to be initialized or discarded.

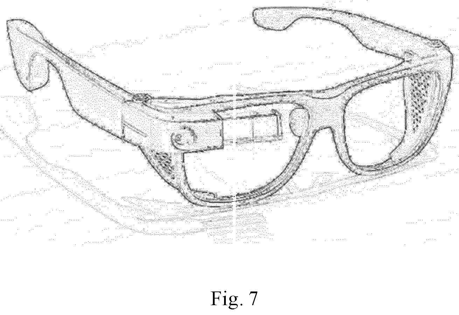

**.** The system of the present invention also includes, in a preferred embodiment, a pair of augmented reality glasses, of the Google Glass type as shown in figure 7. These glasses are a wearable device able to communicate via bluetooth and wifi, equipped with a processor with an operating system, with a camera for capturing images and videos, with a display for overlapping the image at the margin of the field of view and with a touch interface for interaction with the operator. The device is capable of running one or more dedicated software applications developed with the same development tools used for mobile applications.

**.** The laboratory technician can obtain the information associated with the specific cassette he holds in his hand, simply by taking it to the vision area of the augmented reality glasses, which after recognizing the cassette (if properly initialized), will project on the eye of the Operator the file associated with the software of the laboratory with the alphanumeric data of interest; if the cassette is not derived from the dispensing machine and properly initialized, augmented reality glasses would recognize it as not relevant or otherwise to be initialized or discarded.

## Claims

1. A system for identifying embedding cassettes in a lab or in a hospital, the system comprising:
a. a set of blank cassettes (100), **characterized in that** each cassette contains a two-dimensional code (103) on a face of the cassette, which code has a number of possible combination higher than 10⁹;
b. an apparatus (500) comprising:
i. at least one hub (501) for storing cassettes (100); and
ii. a reading system (502) for reading code (103) of cassettes (100); and
c. a processor adapted for associating the bidimensional code of the cassette to the information relating to the histological content of the cassette, to the patient and to other possible information decided by the lab and/or hospital,
wherein the system does not comprise a printer for cassettes.

2. The system according to claim 1, further comprising a pair of augmented reality glasses that allow an operator to obtain information associated to a specific cassette by simply holding the cassette in the visual field of the augmented reality glasses.

3. The system according to any of claims 1 or 2, wherein the bidimensional code is a bidimensional matrix comprising i lines and j columns, wherein the product n= i x j is comprised between 20 and 100, and wherein, when defining k the number of marked positions, the ratio k/n is comprised between 0.20 and 0.80.

4. The system according to claim 3, wherein i is comprised between 6 and 12 and j is comprised between 5 and 10.

5. The system according to any of claims 3 or 4, wherein the ratio k/n is comprised between 0.30 and 0.70.

6. The system according to any of claims 1 to 4, wherein the bidimensional code consists of marked and unmarked positions.

7. The system according to any of claims 1 to 6, wherein the bidimensional code of the embedding cassette (100) is represented by a vectorial code of segments differently oriented of different length that can be represented in at least 10⁹ combinations.

8. The system according to any of claims 1 to 6, wherein the bidimensional code of the embedding cassette (100) is represented by modules of arbitrary form, in the form of segments of various form, length and tilt.

9. A method of classifying embedding cassettes, which method comprises the following steps:
a. charging a number of printed blank cassettes, wherein each cassette contains a two-dimensional code (103) on a face of the cassette, which code has a number of possible combination higher than 10⁹, on an apparatus for dispensing cassettes for histological inclusion comprising:
i. at least one hub (501) for storing cassettes (100); and
ii. a CCD (502) for reading code (103) of cassettes (100);
b. requesting the apparatus to dispense a required number of cassettes;
c. reading by a reading device a two-dimensional code printed on the cassette ejected by the apparatus and made available to the operator;
d. associating information related to the histopathological material inserted in the cassette with the two-dimensional code printed on the cassette.

## Patentansprüche

1. System zur Identifizierung von Einbettkassetten in einem Labor oder in einem Krankenhaus, wobei das System umfasst:
a. einen Satz leerer Kassetten (100), **dadurch gekennzeichnet, dass** jede Kassette auf einer Fläche der Kassette einen zweidimensionalen Code (103) enthält, wobei der Code eine Anzahl möglicher Kombinationen von mehr als 10^9 aufweist;
b. eine Vorrichtung (500), umfassend:
i. mindestens eine Nabe (501) zum Speichern der Kassetten (100); und
ii. ein Lesesystem (502) zum Lesen des Codes (103) der Kassetten (100); und
c. einen Prozessor, der dazu ausgelegt ist, den zweidimensionalen Code der Kassette mit Informationen in Bezug auf den histologischen Inhalt der Kassette, den Patienten und weitere mögliche, vom Labor und/oder Krankenhaus festgelegte Informationen zu verknüpfen,
wobei das System keinen Kassettendrucker umfasst.

2. System nach Anspruch 1, ferner umfassend ein Paar Augmented-Reality-Brillen, die es einem Bediener ermöglichen, Informationen zu erhalten, die einer bestimmten Kassette zugeordnet sind, indem die Kassette einfach im Sichtfeld der Augmented-Reality-Brillen gehalten wird.

3. System nach einem der Ansprüche 1 oder 2, wobei der zweidimensionale Code eine zweidimensionale Matrix mit i Zeilen und j Spalten ist, wobei das Produkt n = i × j zwischen 20 und 100 liegt, und wobei, wenn k als die Anzahl der markierten Positionen definiert wird, das Verhältnis k/n zwischen 0,20 und 0,80 liegt.

4. System nach Anspruch 3, wobei i zwischen 6 und 12 liegt und j zwischen 5 und 10 liegt.

5. System nach einem der Ansprüche 3 oder 4, wobei das Verhältnis k/n zwischen 0,30 und 0,70 liegt.

6. System nach einem der Ansprüche 1 bis 4, wobei der zweidimensionale Code aus markierten und nicht markierten Positionen besteht.

7. System nach einem der Ansprüche 1 bis 6, wobei der zweidimensionale Code der Einbettkassette (100) durch einen Vektorcode aus unterschiedlich orientierten Segmenten unterschiedlicher Länge dargestellt ist, der in mindestens 10^9 Kombinationen dargestellt werden kann.

8. System nach einem der Ansprüche 1 bis 6, wobei der zweidimensionale Code der Einbettkassette (100) durch Module beliebiger Form dargestellt ist, in Form von Segmenten verschiedener Form, Länge und Neigung.

9. Verfahren zur Klassifizierung von Einbettkassetten, wobei das Verfahren die folgenden Schritte umfasst:
a. laden einer Anzahl bedruckter leerer Kassetten, wobei jede Kassette auf einer Fläche der Kassette einen zweidimensionalen Code (103) enthält, wobei der Code eine Anzahl möglicher Kombinationen von mehr als 10^9 aufweist, in eine Vorrichtung zum Ausgeben von Kassetten für die histologische Einbettung, umfassend:
i. mindestens eine Nabe (501) zum Speichern der Kassetten (100); und
ii. eine CCD-Vorrichtung (502) zum Lesen des Codes (103) der Kassetten (100);
b. anfordern der Vorrichtung, eine erforderliche Anzahl von Kassetten auszugeben;
c. lesen eines auf der von der Vorrichtung ausgeworfenen und dem Bediener zur Verfügung gestellten Kassette aufgedruckten zweidimensionalen Codes mittels einer Lesevorrichtung;
d. zuordnen von Informationen in Bezug auf das in die Kassette eingebrachte histopathologische Material zu dem auf der Kassette aufgedruckten zweidimensionalen Code.

## Revendications

1. Un système pour identifier des cassettes d'inclusion dans un laboratoire ou dans un hôpital, le système comprenant :
a. un ensemble de cassettes vierges (100), **caractérisé en ce que** chaque cassette contient un code bidimensionnel (103) sur une face de la cassette, ledit code ayant un nombre de combinaisons possibles supérieur à 10⁹ ;
b. un appareil (500) comprenant :
i. au moins un moyeu (501) pour stocker les cassettes (100) ; et
ii. un système de lecture (502) pour lire le code (103) des cassettes (100) ; et
c. un processeur apte à associer le code bidimensionnel de la cassette aux informations relatives au contenu histologique de la cassette, au patient et à d'autres informations possibles décidées par le laboratoire et/ou l'hôpital,
dans lequel le système ne comprend pas d'imprimante pour cassettes.

2. Le système selon la revendication 1, comprenant en outre une paire de lunettes de réalité augmentée permettant à un opérateur d'obtenir des informations associées à une cassette spécifique simplement en maintenant la cassette dans le champ visuel des lunettes de réalité augmentée.

3. Le système selon l'une quelconque des revendications 1 ou 2, dans lequel le code bidimensionnel est une matrice bidimensionnelle comprenant i lignes et j colonnes, dans lequel le produit n = i × j est compris entre 20 et 100, et dans lequel, en définissant k comme le nombre de positions marquées, le rapport k/n est compris entre 0,20 et 0,80.

4. Le système selon la revendication 3, dans lequel i est compris entre 6 et 12 et j est compris entre 5 et 10.

5. Le système selon l'une quelconque des revendications 3 ou 4, dans lequel le rapport k/n est compris entre 0,30 et 0,70.

6. Le système selon l'une quelconque des revendications 1 à 4, dans lequel le code bidimensionnel consiste en positions marquées et non marquées.

7. Le système selon l'une quelconque des revendications 1 à 6, dans lequel le code bidimensionnel de la cassette d'inclusion (100) est représenté par un code vectoriel de segments orientés différemment et de longueurs différentes pouvant être représenté en au moins 10^9 combinaisons.

8. Le système selon l'une quelconque des revendications 1 à 6, dans lequel le code bidimensionnel de la cassette d'inclusion (100) est représenté par des modules de forme arbitraire, sous la forme de segments de formes, de longueurs et d'inclinaisons diverses.

9. Procédé de classification de cassettes d'inclusion, lequel procédé comprend les étapes suivantes :
a. charger un nombre de cassettes vierges imprimées, dans lesquelles chaque cassette contient un code bidimensionnel (103) sur une face de la cassette, ledit code ayant un nombre de combinaisons possibles supérieur à 10^9, sur un appareil de distribution de cassettes pour inclusion histologique comprenant :
i. au moins un moyeu (501) pour stocker les cassettes (100) ; et
ii. un dispositif CCD (502) pour lire le code (103) des cassettes (100) ;
b. demander à l'appareil de distribuer un nombre requis de cassettes ;
c. lire, au moyen d'un dispositif de lecture, un code bidimensionnel imprimé sur la cassette éjectée par l'appareil et mise à disposition de l'opérateur ;
d. associer des informations relatives au matériel histopathologique inséré dans la cassette au code bidimensionnel imprimé sur la cassette.
